Europäisches Patentamt

European Patent Office

Office européen des brevets

(19)

(11) EP 0 895 333 A2

## (12) EUROPÄISCHE PATENTANMELDUNG

(43) Veröffentlichungstag:
03.02.1999 Patentblatt 1999/05

(51) Int. Cl.⁶: $H02J\ 13/00$

(21) Anmeldenummer: 98112329.2

(22) Anmeldetag: 03.07.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 29.07.1997 DE 19732565

(71) Anmelder: ITF-EDV Fröschl GmbH
93194 Walderbach (DE)

(72) Erfinder:
• Fröschl, Wilfried
93152 Etterzhausen (DE)
• Zintl, Peter
93092 Friesheim/Barbing (DE)

(74) Vertreter:
Graf, Helmut, Dipl.-Ing. et al
Postfach 10 08 26
93008 Regensburg (DE)

(54) **System zur energie- und/oder tarif-abhängigen Steuerung von Leistungsverbrauchern, insbesondere elektrischen Leistungsverbrauchern**

(57) Ein System zur energie- und tarif-abhängigen Steuerung von Leistungsverbrauchern besitzt eine Kommunikations- und Steuereinheit, die für die Übertragung von Meß- und/oder Steuerdaten mit einem Leistungsverbraucher sowie mit einer Leitstelle zumindest eines Leistungsanbieters in Verbindung steht. Über die Steuereinheit ist eine unmittelbare oder mittelbare Steuerung des Leistungsverbrauchers durch von der Leitstelle gelieferte Steuerdaten möglich.

FIG. 1

EP 0 895 333 A2

**Beschreibung**

Die Erfindung bezieht sich auf ein System gemäß Oberbegriff Patentanspruch 1, 2, 3 oder 4.

„Leistungsempfänger" in Sinne der Erfindung sind u.a. natürliche und juristische Personen, Firmen, Behörden usw., die die von einem Leistungsanbieter gelieferte Leistung verbrauchen, Weiterverteiler von Energie und/oder Leistungen usw.. „Leistungsverbraucher" sind im Sinne der Erfindung u.a. Geräte, Einrichtungen, Systeme usw., an oder in denen die angebotene Leistung verbraucht und/oder weiterverteilt wird.

„Meßstellen" im Sinne der Erfindung sind u.a. diejenigen Orte, an denen die gelieferte und/oder verbrauchte Leistung durch wenigstens eine Meßstation ermittelt wird. „Verbrauchsgrößen oder -Werte" im Sinne der Erfindung sind insbesondere solche Größen, die den Verbrauch an Elektrizität betreffen. „Leistungslieferant oder -anbieter" im Sinne der Erfindung ist ein Unternehmen, welches die von einem Leistungsverbraucher benötigte Leistung, beispielsweise an Elektrizität, Gas, Wasser, Wärme usw. zur Verfügung stellt. Ein solcher Leistungsanbieter ist beispielsweise ein Leistungserzeuger oder aber ein Unternehmen, welches im wesentlichen nur als Leistungsverteiler tätig ist.

In dem sich zunehmend liberalisierenden Leistungs- oder Energie-Markt hat der Leistungsempfäner zukünftig die Möglichkeit, die gewünschte Leistung (insbesondere auch elektrische Energie) von unterschiedlichen, im Wettbewerb stehenden Leistungsanbietern zu beziehen. Hierdurch wird es zunehmend auch möglich, Verbraucher, d.h. insbesondere auch Produktionen, im Hinblick auf die benötigte Energie und den angebotenen Tarif optimal zu steuern, d.h. eine energie- und tarifabhängige Steuerung auch optimal vorzunehmen.

Aufgabe der Erfindung ist es, ein System aufzuzeigen, mit welchem eine energie- und tarifabhängige Steuerung möglich ist. Zur Lösung dieser Aufgabe ist ein System entsprechend dem Patentanspruch 1, 2, 3 oder 4 ausgebildet.

Mit der Erfindung ist es u.a. möglich, daß von einer Leitstelle des Leistungsanbieters bzw. Lieferanten bzw. mit den von dieser Leitstelle übertragenen Steuer-Daten, z.B. mit Tarifdaten oder mit von Tarifdaten oder -parametern abgeleiteten Steuer-Daten, direkt steuernd in den Leistungsverbraucher (z.B. Produktion) eingegriffen wird, oder aber mittelbar dadurch, daß die Kommunikations- und Steuereinheit unter Berücksichtigung dieser Steuer-Daten und eigener Tarifparamitter, die in der Kommunikations- und Steuereinheit oder in einem an diese angeschlossenen peripheren Gerät abgelegt sind, den Verbraucher bzw. die Produktion steuert, und zwar z.B. in der Form, daß der Energieverbrauch möglichst optimal an einen (augenblicklich) gültigen Tarif angeglichen ist.

Mit dem erfindungsgemäßen System ist es insbesondere auch möglich, einen sogenannten „Spot-Markt" optimal zu nutzen, d.h. beispielsweise bei einer vorübergehend besonders günstig angebotenen Leistung bzw. bei einem vorübergehenden, besonders günstigen Tarif möglichst viel Leistung zu beziehen, um dann zu einem anderen Zeitpunkt bei einem ungünstigeren Tarif die verbrauchte Leistung zurückzufahren usw. Mit dem erfindungsgemäßen System hat auch der Leistungsanbieter die Möglichkeit, vorübergehende überschüssige Leistung besser bei Leistungsabnehmern unterzubringen. Weiterhin hat der Leistungsempfänger auch die Möglichkeit die jeweils benötigte Leistung von dem günstigsten Leistungsanbieter zu beziehen.

In einer bevorzugten Ausführungsform wird dieses erfindungsgemäße System zur Energie-Tarif-Steuerung zusammen mit einem System zur Erfassung und/oder Berechnung von abrechnungsrelevanten Verbrauchsgrößen verwendet, bei dem die Verbrauchswerte oder die dem jeweiligen Verbrauch proportionalen Datensätze an einen Rechner oder Server des Leistungsanbieters übertragen werden, in welchem sämtliche tarifrelevanten Parameter abgelegt sind und in dem dann die verrechnungsrelevanten Daten unter Berücksichtigung der übermittelten Verbrauchswerte und der Tarifparameter gebildet werden.

Die Erfindung wird im Folgenden anhand der Figuren an Ausführungsbeispielen näher erläutert. Es zeigen:

Fig. 1        in schematischer Darstellung eine mögliche Ausführungsform des erfindungsgemäßen Systems zur Erfassung und/oder Berechnung von verrechnungsrelevanten Verbrauchsgrößen, und zwar erläutert am Beispiel eines Systems zur Erfassung und/oder Berechnung der verrechnungsrelevanten Größen beim Verbrauch von elektrischer Energie;

Fig. 2        in einem vereinfachten Block- oder Funktionsdiagramm eine der Meßstationen des Systems der Fig. 1;

Fig. 3        ein Diagramm, welches einen Verbrauch (in KWh) in zeitlicher Abhängigkeit wiedergibt;

Fig. 4        in Einzeldarstellung und als Block einen als Zählregister dienenden Ringspeicher der Meßstation der Fig. 2;

Fig. 5        in einem vereinfachten Block- bzw. Funktionsdiagramm die wesentlichen in einem der Server des Systems, allerdings softwaremäßig installierten Funktionen;

Fig 6        in einem vereinfachten Block- bzw. Funktionsdiagramm eine mögliche Ausführung einer Meßstation;

Fig. 7        in einem vereinfachten Blockdiagramm nochmals wesentliche Elemente des erfindungsgemäßen Kundenprozeß-Steuersystems;

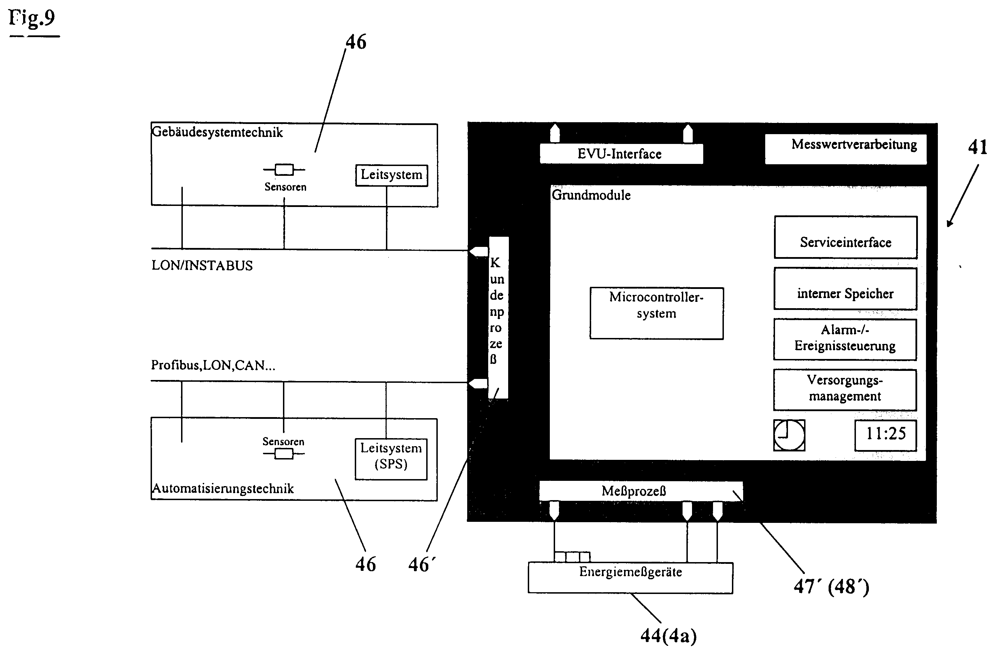

Fig. 8 und 9    schematische Darstellungen der Steuereinheit des Systems zur energie- und tarif-abhängigen Steuerung von Leistungsverbrauchern bzw. des Kundenprozeß-Steuersystems.

Die nachfolgende Beschreibung bezieht sich zunächst auf ein System, mit dem die verrechnungsrelevanten Verbrauchsdaten einer Vielzahl von Abnehmer von elektrischer Energie erfaßt und/oder berechnet werden und bei dem die Erfindung bevorzugt Anwendung findet. Mit diesem System können die von einem EVU gelieferte Energiemenge und auch Leistungsbereitstellung dem jeweiligen Kunden bzw. Leistungsempfänger in Rechnung gestellt werden, und zwar unter Berücksichtigung der Parameter bzw. Vereinbarungen des mit dem Kunden bestehenden Tarifvertrages. Es versteht sich, daß das nachstehend beschriebene System aber auch für andere Energiearten, beispielsweise für Gas, Wärmeenergie, oder für andere Verbrauchsarten, beispielsweise für Wasser oder die Abnahme von Abwasser angewandt werden kann.

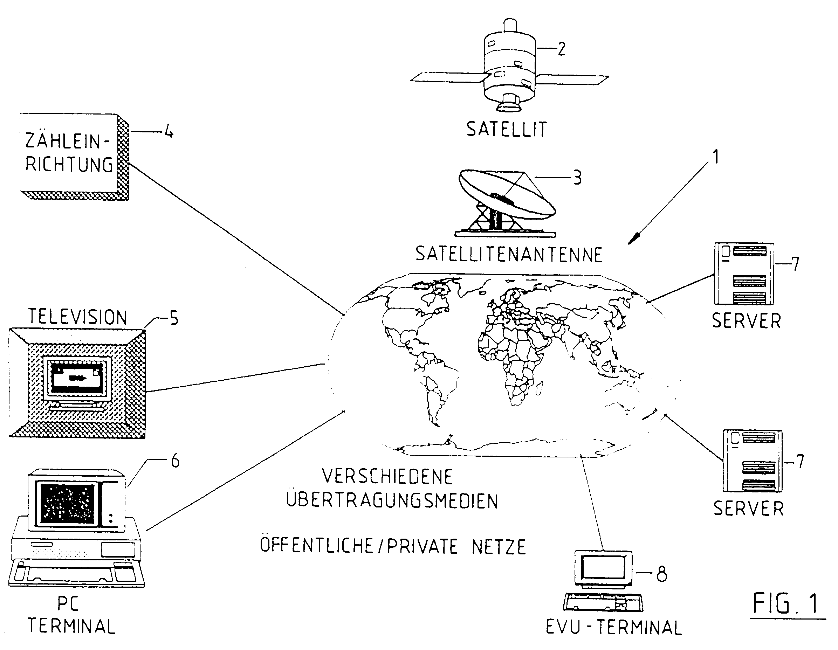

Wie in der Fig. 1 dargestellt ist, umfaßt das System zunächst ein Datenübertragungsnetz 1, welches beispielsweise ein öffentliches Netz oder ein privates Netz ist und welches z.B. weltweit installiert ist, u.a. unter Verwendung von nicht dargestellten Datenübertragungsleitungen, einschließlich Richtfunkstrecken, von Nachrichtensatelliten 2 und entsprechenden Empfangsantennen 3 usw.

Zu dem Datennetz 1, welches beispielsweise auch ein kommerzielles Datennetz oder aber ein privates, d.h. z.B. EVU-eigenes Datennetz sein oder aber auch aus mehreren, miteinander verknüpften Netzen bestehen kann, haben entsprechend der Fig. 1 verschiedene Geräte bzw. Einrichtungen Zugang, und zwar über nicht dargestellte Terminals oder Hosts, nämlich:

- Meßstationen 4,
- TV-Geräte 5,
- PC-Terminals 6,
- Server 7 und
- EVU-Terminal 8.

Tatsächlich sind dem Netz 1 eine Vielzahl von Meßstationen 4 zugeordnet, und zwar wenigstens eine Meßstation 4 für jeden Kunden oder Verbraucher an dessen Meßstelle(n). Weiterhin besitzt jeder Kunde wenigstens ein TV-Gerät oder einen PC-Terminal. Für die von einem EVU betreuten Kunden genügt theoretisch ein einziger Server 7. Allerdings kann es bei einer Vielzahl von Kunden notwendig, zumindest jedoch zweckmäßig sein, für eine reibungslose und schnelle Datenübertragung und Verarbeitung mehrere Server 7 vorzusehen. Weiterhin können aus mehreren Gründen auch mehrere EVU-Terminals vorgesehen werden. Die Meßstationen 4 befinden sich jeweils an den Meßstellen, d.h. z.B. an dem Einspeiseort. Die Server 7 können in beliebiger Entfernung von dem Leistungsempfänger installiert sein.

Eine Besonderheit des in den Figuren 1 - 5 wiedergegebenen Systems besteht darin, daß insbesondere auch bei Sondervertragskunden, die u.U. sehr komplexe, eine Vielzahl von Tarif-Parametern haben, aus denen letztlich unter Berücksichtigung des tatsächlichen Verbrauchs die Rechnungsstellung erfolgt, die Meßstationen 4 jeweils nur den tatsächlichen Verbrauch sowie ein zeitabhängiges Verbrauchs- oder Lastprofil ermittelt, und daß lediglich diese Meßdaten in Form eines digitalen Datensatzes 9 zusammen mit einer Identfikation 10 über das Netzwerk 1 an einen Server 7 übertragen werden, und zwar jeweils am Ende einer vorgegebenen Abfrage- bzw. Abrechnungsperiode, z.B. jeweils am Monatsende, und/oder aufgrund einer entsprechenden Anforderung über das Netzwerk 1 an die jeweilige Meßstation 4. Diese Anforderung erfolgt beispielsweise von dem zugeordneten Server 7 oder aber von einem EDV-Terminal 8. Die Identifikation 10 dient zur Unterscheidung der jeweiligen Meßstation 4 von anderen Meßstationen und ist für jede Meßstation individuell unterschiedlich.

Das bisher insbesondere bei Sondervertragskunden im jeweiligen Zähler auch hardware-mäßig enthaltene Tarif-Modul ist aus den Meßstationen 4 ausgelagert und für jede Meßstation individuell als virtuelles, d.h. softwaremäßiges Tarif-Modul auf dem zugehörigen Server 7 vorhanden.

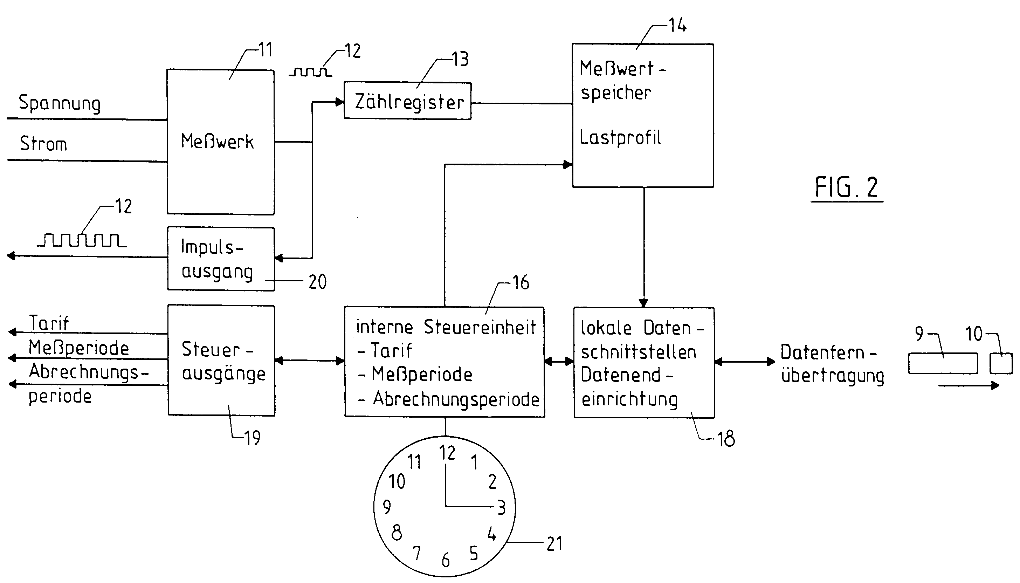

Wie die Fig. 2 zeigt, besitzt jede Meßstation 4 ein Meßwerk 11, welches aus der Spannung und dem Strom unter Berücksichtigung der Phasenlage an seinem Ausgang ein dem Verbrauch proportionales Signal liefert, und zwar bei der dargestellten Ausführungsform in Form einer Impulsfolge 12, wobei jeder Impuls einer bestimmten Energiemenge entspricht (beispielsweise 1000 Impulse/kWh oder auch 1000 Impulse/kVArh).

Die Impulse 12 von einem Zählregister erfaßt, welches an seinem Ausgang einen der Anzahl der eingegangenen Impulse entsprechenden Zählwert liefert, der dann ein Maß für die jeweils verbrauchte Energie ist.

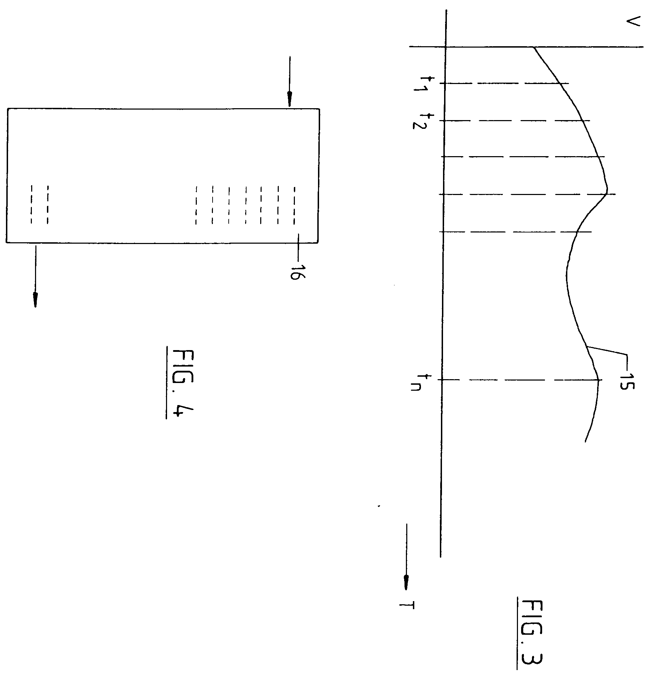

Die von dem Zählregister 13 gelieferten Verbrauchsdaten werden in dem Meßwertspeicher 14 zusammen mit einem Lastprofil, d.h. zusammen mit dem zeitlichen Verlauf des Verbrauchs für eine bestimmte Abfragperiode, beispielsweise Kalendermonat gespeichert. Zum besseren Verständnis wird hierzu auf die Figuren 3 und 4 verwiesen. In der Fig. 3 ist mit dem Graphen 15 ein Lastprofil dargestellt, d.h. die zeitliche Veränderung des Verbrauches. Dieser sich zeitlich ändernde Verbrauch wird jeweils mit einer von der internen Steuereinheit 15 gebildeten Tastfrequenz abgetastet, und zwar zu den Zeiten t1, t2, .... tn, wobei der zu jedem Zeitpunkt seit dem Anfang der Abfragperiode angefallene Verbrauch in einem Speicher 16 des Meßwertspeichers 14 gespeichert wird.

Am Ende jeder Abfragperiode werden dann das Lastprofil 15 sowie der Gesamtverbrauch als Datensatz 9 über die lokale Schnittstelle 18 und das Datennetz 1 an den zugeordneten Server 7 übermittelt.

Das System ist interaktiv ausgebildet, d.h. es besteht die Möglichkeit für einen Berechtigten, z.B. das EVU z.B. von dem Terminal 8 aus an die Meßstationen Daten zu übertragen, und zwar individuell über die jeweilige lokale Schnittstelle 18. Es können beispielsweise die Daten aus dem Meßwertspeicher 14 auch als Datensatz 9 mit der Identifikation 10 vom Terminal 8 oder von dem zugehörigen Server 7 abgerufen werden. Weiterhin können insbesondere auch andere Daten, beispielsweise der Beginn und das Ende von bestimmten Tarifzeiten (Hoch- und Niedrigtarif), Beginn und ggf. Ende der Überwachungsperiode für den Energieverbrauch, Beginn und Ende der Abfrag- bzw. Abrechnungsperiode übertragen werden. Diese Daten werden dann an einem speziellen Steuerausgang 19 zur Verfügung gestellt, an den der jeweilige Kunde ein seinen Energieverbrauch überwachendes und/oder optimierendes Gerät anschließen kann, welchem zusätzlich auch über einen Impulsausgang 20 die verbrauchsabhängigen Impulse 12 zugeführt werden.

Der internen Steuereinheit 16 ist noch eine Echtzeit-Uhr 21 zugeordnet, die beispielsweise mit dem DCF-77 zeitnormal synchronisiert ist.

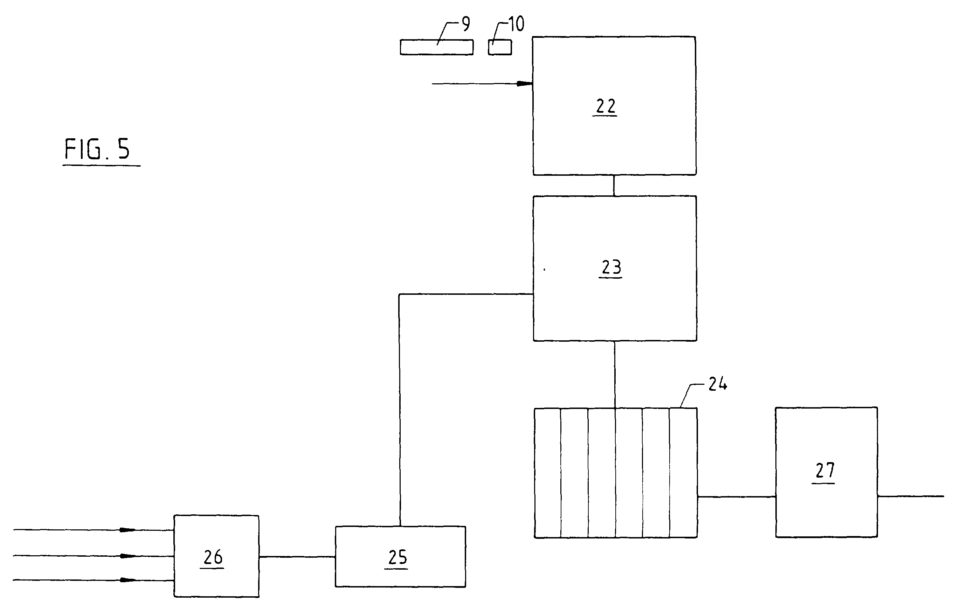

Die Meßdaten der einzelnen Meßstationen 4 werden zyklisch oder aber auf jeweilige Anforderung zu dem jeweiligen Server 7 übertragen. Wie bereits erwähnt, ist jeder Meßeinrichtung 4 auf dem betreffenden Server 7 ein virtuelles Tarif-Modul zugeordnet. Die Erfassung und Berechnung der abrechnungsrelevanten Werte erfolgt auf dem Server 7 in dem jeweiligen Tarif-Modul. Hierfür sind dort softwaremäßig u.a. die in der Fig. 5 wiedergegebenen Funktionen realisiert.

Die zyklisch abgefragten und/oder angeforderten Daten 9 werden zunächst bei 22 zwischengespeichert und dann einer Datenverarbeitung 23 zugeführt, und zwar zur Bildung der abrechnungsrelevanten Werte, die schließlich bei 24 abgespeichert werden.

Bei der Bildung der abrechnungsrelevanten Werte werden die mit dem jeweiligen Kunden vereinbarten und bei 25 abgespeicherten Tarifparameter berücksichtigt. Diese Tarifparameter sind u.a.:

- Tarif- oder Zeit-Zonen bzw. deren Beginn und Ende, insbesondere auch Zeiten für Haupt- und Nebentarife;
- Preis für Haupt- und Nebentarife;
- verbrauchsabhängige Staffelung des Energiepreises;
- maximal zulässiger oder vereinbarter Leistungsshöchstwert;
- maximal in einer Prüfperiode zulässiger Energie-Verbrauch;
- Anfang und Beginn einer jeden Abrechnungsperiode;
- vereinbarter maximaler Energie-Verbrauch während einer Prüfperiode,
- Dauer der Prüfperiode,
- Jahreszeit oder von der Jahreszeit abhängiger Tarif;
- Primärenergie-Kosten bzw. von den Primärenergie-Kosten abhängiger Tarif;
- Beginn und Ende der Bereitstellung von elektrischer Energie (bei einem von mehreren EVUs belieflerten Kunden usw.).

Aus diesen sowie eventuell aus weiteren Tarif-Parametern werden dann durch die Datenverarbeitung 23 die verrechnungsrelevanten meßgrößen ermittelt und bei 24 abgespeichert.

So sind beispielsweise in dem jeweiligen virtuellen Tarifmodul auch eine oder mehrere der folgende Listen für jeden Verbraucher individuell gespeichert:

Anzeigeliste Überverbrauch:

| Kennzahl | | Format | | | | | | | Interpretation |
|---|---|---|---|---|---|---|---|---|---|
| 0 | 0 | 0 | 0 | 0 | 0 | 0 | 0 | 0 | Anzeigekontrolle |
| . | . | . | . | . | . | . | . | . | |
| . | . | . | . | . | . | . | . | . | |
| . | . | . | . | . | . | . | . | . | |
| . | . | . | . | . | . | . | . | . | |
| 9 | 9 | 9 | 9 | 9 | 9 | 9 | 9 | 9 | |
| 0 | 1 | | X | X | X | X | X | X | Identifikationsnummer 01 |
| 0 | 2 | | X | X | X | X | X | X | Identifikationsnummer 02 |
| | 1 | | | | | X | X | X | Registriergrenze (kWh) |
| | 2 | | | | | X | X | X | Momentanleistung (kWh) |
| | 3 | X | X | X | X | X | X | X | Überverbrauch (kWh) |
| | 4 | X | X | X | X | X | X | X | Hochtarif-Energie (kWh) |
| | 5 | X | X | X | X | X | X | X | Niedertarif-Energie (kWh) |
| | 6 | X | X | X | X | X | X | X | Gesamtverbrauch (kWh) |

X Dezimalziffer; Kommastelle parametrierbar

Ausgabeliste Überverbrauch:

| Datensatz | Inhalt | Interpretation |
|---|---|---|
| FF(0) | 0 | fataler Fehler |
| FF01(0) | 0 | ROM-Fehler |
| FF02(0) | 0 | RAM-Fehler |

| | | | | | | | | | |
|---|---|---|---|---|---|---|---|---|---|
| FF03(0) | | | | | | 0 | | | EEPROM-Fehler |
| FF04(0) | | | | | | 0 | | | Parameter-Fehler |
| FF05(0000) | | | 0 | 0 | 0 | 0 | | | Watchdog-Zähler |
| FF06(0000) | | | 0 | 0 | 0 | 0 | | | Netzausfall-Zähler |
| 01(123456) | 1 | 2 | 3 | 4 | 5 | 6 | | | Identifikationsnr. 01 |
| 02(654321) | 6 | 5 | 4 | 3 | 2 | 1 | | | Identifikationsnr. 02 |
| 1(04.5) | | | | 0 | 4. | 5 | | kW | Registriergrenze |
| 2(01.6) | | | | 0 | 1. | 6 | | kW | Momentanleistung |
| 3(01234.25) | 0 | 1 | 2 | 3 | 4. | 2 | 5 | kWh | Überverbrauch |
| 4(42345.21) | 4 | 2 | 3 | 4 | 5. | 2 | 1 | kWh | Hochtarif-Energie |
| 5(19364.45) | 1 | 9 | 3 | 6 | 4. | 4 | 5 | kWh | Niedertarif-Energie |
| 6(86725.36) | 8 | 6 | 7 | 2 | 5. | 3 | 6 | kWh | Gesamtverbrauch |

FF Funktionsfehler; (0) kein Fehler; (F) Fehler

Anzeigeliste Mehrtarif

| Kennzahl | | | | Format | | | | | | | Interpretation |
|---|---|---|---|---|---|---|---|---|---|---|---|
| 0 | 0 | | | 0 | 0 | 0 | 0 | 0 | 0 | 0 | Anzeigenkontrolle |
| . | | | | . | . | . | . | . | . | . | |
| . | | | | . | . | . | . | . | . | . | |
| . | | | | . | . | . | . | . | . | . | |
| 9 | 9 | | | 9 | 9 | 9 | 9 | 9 | 9 | 9 | |
| 0 | 0 | | | X | X | X | X | X | X | X | Identifikationsnummer |
| 0 | 1 | | | X | X | X | X | X | X | X | aktueller Energietarif 1 |
| 0 | 2 | | | X | X | X | X | X | X | X | aktueller Energietarif 2 |
| 0 | 3 | | | X | X | X | X | X | X | X | aktueller Energietarif 3 |
| 0 | 4 | | | X | X | X | X | X | X | X | aktueller Energietarif 4 |
| 0 | 5 | | | X | X | X | X | X | X | X | Gesamtverbrauch Energie total (kWh) |
| 1 | 0 | | | | | | | | X | X | Anzahl der Abspeicherungen |
| 0 | 1. | 0 | 1 | X | X | X | X | X | X | X | jüngster Vorwert Tarif 1 (kWh) |
| 0 | 2. | 0 | 1 | X | X | X | X | X | X | X | jüngster Vorwert Tarif 2 (kWh) |
| 0 | 3. | 0 | 1 | X | X | X | X | X | X | X | jüngster Vorwert Tarif 3 (kWh) |
| 0 | 4. | 0 | 1 | X | X | X | X | X | X | X | jüngster Vorwert Tarif 4 (kWh) |
| | | | | | | | | | | | |
| | | | | | | | | | | | |
| | | | | | | | | | | | |
| | | | | | | | | | | | |
| | | | | | | | | | | | |
| 0 | 1. | 1 | 3 | X | X | X | X | X | X | X | ältester Vorwert Tarif 1 (kWh) |
| 0 | 2. | 1 | 3 | X | X | X | X | X | X | X | ältester Vorwert Tarif 2 (kWh) |
| 0 | 3. | 1 | 3 | X | X | X | X | X | X | X | ältester Vorwert Tarif 3 (kWh) |
| 0 | 4. | 1 | 3 | X | X | X | X | X | X | X | ältester Vorwert Tarif 4 (kWh) |
| 1 | 1. | 0 | 1 | X | X | X | X | X | X | X | Benutzungs-h-Zähler Tarif 1 |
| 1 | 1. | 0 | 2 | X | X | X | X | X | X | X | Benutzungs-h-Zähler Tarif 2 |
| 1 | 1. | 0 | 3 | X | X | X | X | X | X | X | Benutzungs-h-Zähler Tarif 3 |
| 1 | 1. | 0 | 4 | X | X | X | X | X | X | X | Benutzungs-h-Zähler Tarif 4 |

| 9 | 8 | | | . | . | . | . | . | . | . | Anzeigeposition für Vorwertspeicherlöschung |

X Dezimalziffer; Kommastelle parametrierbar

Ausgabeliste Mehrtarif:

| Datensatz | Inhalt | Interpretation |
|---|---|---|
| FF(00) | 00 | Fehlermeldung codiert |
| 0(6793478) | 6793478 | Identifikationsnummer |
| 8.0(693498.1*kWh) | 693498.1 kWh | Gesamtverbrauch, Energie total |
| 8.1.1(347356.4*kWh) | 347356.4 kWh | jüngster Vorwert Tarif 1 |
| 8.2.1(186223.9*kWh) | 186223.9 kWh | jüngster Vorwert Tarif 2 |
| 8.3.1(112738.6*kWh) | 112738.6 kWh | jüngster Vorwert Tarif 3 |
| 8.4.1(047179.2*kWh) | 047179.2 kWh | jüngster Vorwert Tarif 4 |
| . | . | . |
| . | . | . |
| . | . | . |
| . | . | . |
| . | . | . |
| 8.1.13(286923.4*kWh) | 286923.4 kWh | ältester Vorwert Tarif 1 |
| 8.2.13(123459.2*kWh) | 123459.2 kWh | ältester Vorwert Tarif 2 |
| 8.3.13(084327.7*kWh) | 824327.7 kWh | ältester Vorwert Tarif 3 |
| 8.4.14(024286.4*kWh) | 824286.4 kWh | ältester Vorwert Tarif 4 |
| 9.00(37) | 37 | Anzahl der Abspeicherungen |
| 9.01(18) | 18 | Tage zwischen letzter Abspeicherung und Vorwert 1 |
| 9.02(09) | 09 | Tage zwischen letzter Abspeicherung und Vorwert 2 |
| . | . | . |
| . | . | . |
| . | . | . |
| . | . | . |
| . | . | . |
| 9.12(15) | 13 | Tage zwischen letzter Abspeicherung und Vorwert 12 |

| 9.13(26) | 26 | Tage zwischen letzter Abspeicherung und Vorwert 13 |
|---|---|---|
| 11.1(012499.5*h) | 012499.5 h | Benutzungs-h-Zähler Tarif 1 |
| 11.2(0187.46.0*h) | 018746.0 h | Benutzungs-h-Zähler Tarif 2 |
| 11.3(024906.2*h) | 024906.2 h | Benutzungs-h-Zähler Tarif 3 |
| 11.4(018746.5*h) | 018746.5 h | Benutzungs-h-Zähler Tarif 4 |

Über eine Eingabe 26, die entweder lokal über eine entsprechende Hardware (Tastatur) oder aber über das Datennetz 1 erfolgt, können die bei 25 gespeicherten Tarif-Parameter für jedes virtuelle Tarif-Modul individuell von Berechtigten eingegeben oder geändert werden, womit eine schnelle Einrichtung und/oder Änderung des jeweiligen virtuellen Tarif-Modus möglich ist, und zwar insbesondere auch bei Änderung und/oder Anpassung eines Tarifvertrages an neue wirtschaftliche Gegebenheit oder durch den Wettbewerb bedingte Umstände.

Da das jeweilige Tarif-Modul nicht mehr im Zähler beim Kunden integriert ist, sondern virtuell auf dem jeweiligen Netzserver 7 eingerichtet ist, können somit Tarif-Module sehr unterschiedlich und kundenspezifisch problemlos eingerichtet werden. Insbesondere ist aber auch eine Tarifänderung problemlos möglich und erfordert keinen Austausch eines Zählers beim jeweiligen Kunden. Tarif- und Vertragsänderungen können somit kostengünstig durchgeführt werden.

Die jeweilige Meßstation 4 kann mit einer relativ einfachen Konstruktion realisiert werden, womit es möglich ist, die Meßstation 4 bei sämtlichen Kunden eines EVU im wesentlichen einheitlich auszubilden, und zwar unabhängig von der Kundengruppe, d.h. von „normalen" Tarifkunden, Sondervertragskunden, usw.. Es entfallen insbesondere auch die bis jetzt bei Sondervertragskunden notwendigen speziellen Zähler.

Die Vereinfachung und Vereinheitlichung der Meßstationen 4 führt zu Einsparungen von Materialresourcen, zu größeren Stückzahlen bei der Herstellung, zu einer vereinfachten Handhabung bei der Montage, zu einem geringeren Entsorgungsaufwand und zu flexiblen Anpassungsmöglichkeiten an Änderungen im Tarif- und Vertragswesen.

Ein weiterer wesentlicher Vorteil besteht u.a. auch darin, daß an den Meßstationen verschleißabhängige Komponenten, z.B. elektronische oder mechanische Anzeigen, Bedienungselemente usw. entfallen. Hierdurch ergibt sich eine wesentlich erhöhte Lebensdauer der Geräte.

Die im Speicher 24 gespeicherten Daten können von dem jeweiligen Leistungsempfänger über seinen PC-Terminal 6 oder über ein TV-Gerät 5 abgerufen werden, wobei diese Daten über ein Graphikprogramm 27 so aufbereitet werden, daß der jeweilige Kunde nicht nur die verrechnungsrelevanten Werte jederzeit abrufen kann, sondern ihm diese Werte am Bildschirm des TV-Gerätes oder PC-Terminals 6 auch optisch in einer von ihm gewünschten und/oder ihm geläufigen optischen Form angeboten werden.

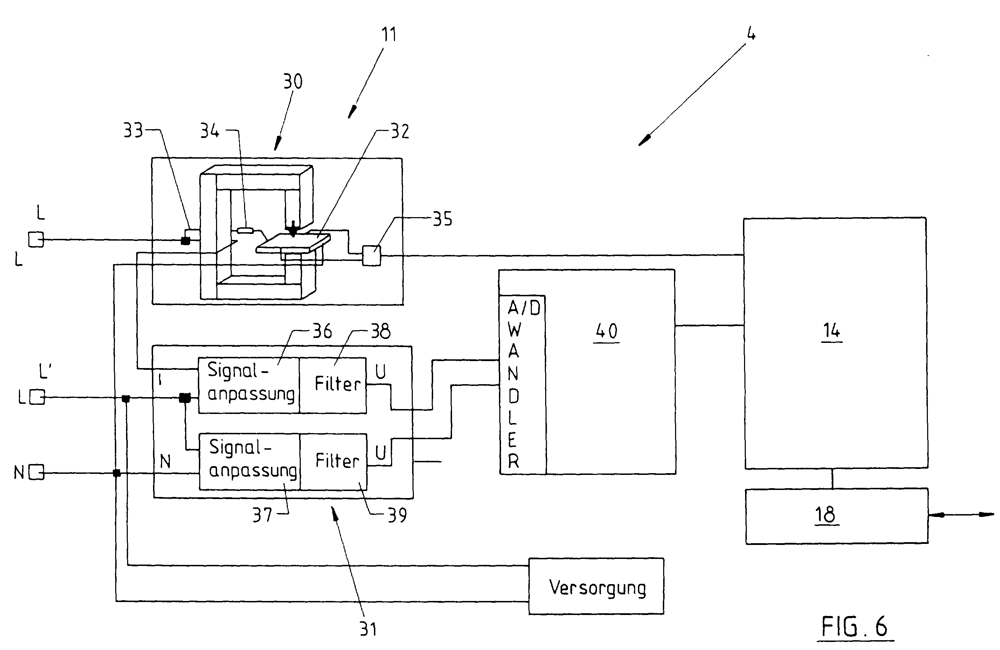

Als Meßwerk 11 eignen sich insbesondere auch solche, die eine hohe Redundanz sicherstellen und zwei unabhängige Meßsysteme aufweisen, welche vorzugsweise nach unterschiedlichen Meßprinzipien arbeiten. Ein derartiges Meßwerk ist in der Fig. 6 dargestellt. Im Detail sind solche Meßwerke in der DE 195 26 870 beschrieben.

Das Meßwerk 11 besteht aus den beiden Meßmodulen 30 und 31, die den gleichen Verbrauch erfassen, und zwar durch unterschiedliche Meßverfahren. Das Meßmodul 30 beruht dabei beispielsweise auf einem Meßverfahren unter Verwendung eines Hallsensors 32. Durch eine Stromspule 33 mit zugehörigem Kern wird ein vom Strom abhängiges, dem Hallsensor 32 durchsetzendes Magnetfeld erzeugt. Über einen Vorwiderstand 34 sind zwei Elektroden des Hallsensors 32 mit der anliegenden Netzspannung beaufschlagt. Die an den beiden anderen Elektroden des Hallsensors anliegende Hallspannung $U_{Hall}$ ist dann proportional zu dem Produkt der Meßgrößen Strom x Spannung x cos $\varphi$.

Dem Hallsensor 32 ist ein Spannungs-Frequenz-Wandler 35 nachgeschaltet, der aus der Hallspannung die Impulsfolge 12 bildet, deren Impulsfolge frequenzabhängig von der Hallspannung und damit abhängig von dem Produkt aus Strom, Spannung und cos $\varphi$ ist. Dieses dem Meßwertspeicher 14 zugeführte Meßsignal 12 hat die Wertigkeit „Impulse/kWh".

Das Meßmodul 31 arbeitet nach einem digitalen Meßverfahren. Die Meßgrößen Strom, Spannung und Phasenwinkel werden in Eingangsstufen 36 und 37 angepaßt und über Tiefpaßfilter 38 und 39 einem in einem Mikroprozessor 40' vorgesehenen Analog-Digital-Wandler zugeführt. Die nach dem Analog-Digital-Wandler vorliegenden digitalen Werte werden von dem Mikroprozessor 40' unter Berücksichtigung der Phasenlage multipliziert und dann dem Meßwertspeicher 14 zugeordnet.

Die von den beiden Meßwandlern 30 und 31 ermittelten Meßwerte werden über das Netzwerk 1 an den zugehörigen Server 7 übertragen und dort gespeichert, um durch die redundante Speicherung die Datensicherheit zu erhöhen. Weiterhin werden die von den Meßmodulen 30 und 31 ermittelten Werte in einem geeigneten Verfahren in dem jeweiligen Server 7 verarbeitet, um so insgesamt ein redundantes System mit der Möglichkeit einer Selbstüberwachung und einer zusätzlichen Fehler-Anzeige und/oder Meldung zu schaffen, die dann erfolgt, wenn die von den beiden Meßmodulen 30 und 31 gelieferten Meßwerte über eine vorgegebene Zeitdauer stärker voneinander abweichen, als dies durch einen vorgegebenen Toleranzbereich oder Grenzwert zugelassen ist.

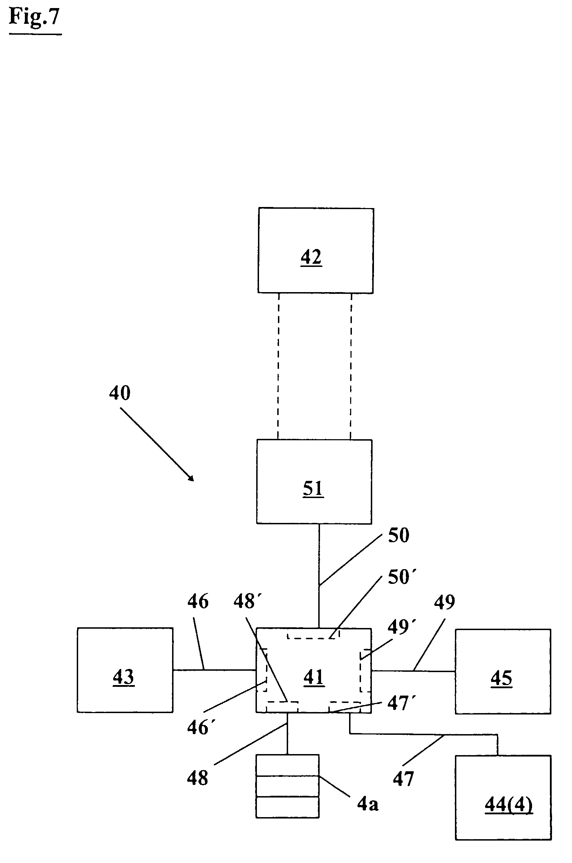

In das vorbeschriebene System zur Erfassung und/oder Berechnung von abrechnungsrelevanten Verbrauchsgrößen ist das erfindungsgemäße System 40 zur energie- und tarif-abhängigen Steuerung von Leistungsverbrauchern, auch „Kundenprozeß-Steuersystem" integriert. Wesentlicher Bestandteil dieses Systems ist u.a. eine Kommunikations-und Steuereinheit 41, die eine Vielzahl von Funktionen besitzt und bei Leistungsabnehmer bzw. beim Kunden installiert ist und eine Vielzahl von Funktionen aufweist, u.a. die einer bidirektionalen Datenübertragung zwischen dem EVU-Terminal 8 bzw. einer dortigen EVU-Leitstelle 42 und dem Leistungsabnehmer bzw. Kunden bzw. den dortigen Leistungsverbrauchern, die in der Figur 7 allgemein mit 43 bezeichnet sind und beispielsweise eine Produktion oder Produktionseinrichtungen darstellen.

Wird das System 40 zusammen mit dem vorstehend beschriebenen System zur Erfassung und/oder Berechnung von abrechnungsrelevanten Verbrauchsgrößen verwendet, so wird die Steuereinheit 41 beispielsweise auch für die Übertragung des am Zähler 44 bzw. an der Meßstation 4 gemessenen Verbrauchs (Verbrauchswerte) an dem EVU-Rechner 7 verwendet. In diesem Fall sind der Zähler 44 und/oder die wenigstens eine Meßstation 4 an die Steuereinheit 41 angeschlossenen.

Der Steuereinheit 41 ist eine Kunden-Leitstelle 45 zugeordnet, die den jeweiligen Kunden eine Steuerung und Überwachung ermöglicht. Zur Steuerung der Produktion 43 über die Steuereinheit 41 sind in der Produktion auch entsprechende Sensoren und Aktoren vorgesehen, die über wenigstens einen Bus 46 zur Übertragung von Steuer- und Meßdaten mit der Steuereinheit 41 bzw. mit einer dortigen Schnittstelle 46' in Verbindung stehen. Bus-Verbindungen mit entsprechenden Schnittstellen bestehen auch zu den anderen, der Steuereinheit 41 zugeordneten peripheren Geräte und Einrichtungen, beispielsweise der Bus 47 mit Schnittstelle 47' zu dem Zähler 44 bzw. der Meßeinrichtung 4, der Bus 48 mit der Schnittstelle 48' für den Anschluß der in der Produktion 43 vorgesehenen Meßeinrichtungen 4a zur Messung der Energieverbräuche verschiedener Abschnitte oder Bereiche der Produktion 43, der Bus 49 mit der Schnittstelle 49' zum Anschluß der Kundenleitstelle 45 und der Bus 50 mit der Schnittstelle 50' zum Anschluß der Steuereinheit 41 an einem Terminal 51, über den die Steuereinheit 41 an das Netz 1 angeschlossen ist bzw. über dieses Netz 1 erreicht werden kann. Bei der beschriebenen Ausbildung des Kunden-Steuersystems kann die Kundenleitstelle 45 die Funktion des Kundenterminals 6 übernehmen, so daß dieser dann entfallen kann.

Wie vorstehend bereits erwähnt, erfolgt über die Steuereinheit 41 die Übertragung u.a. sämtlicher Verbrauchswerte vom Zähler 44 bzw. der Meßeinrichtung 4 an den EVU-Rechner 7 oder die EVU-Leitstelle 42 sowie auch in umgekehrter Richtung die Übertragung tarifrelevanter Parameter, insbesondere auch an die Kundenleitstelle 45, so daß dort u.a. eine Überprüfung des Verbrauchs und der Berechnung möglich ist. Über die Steuereinheit 41 werden weiterhin auch Meßwerte, die von den Sensoren in der Produktion 43 stammen und die bevorzugt die Steuerung dieser Produktion und die Überwachung des Produktionsablaufs unmittelbar betreffen, sowie auch Steuersignale zur Steuerung der Produktion bzw. dortiger Steuersysteme übertragen sowie auch von den Meßeinrichtungen 4a ermittelte Verbrauchswerte, und zwar an die Kundenleitstelle 45 zur Überwachung und Steuerung des Prozesses und insbesondere auch zur energie- und tarifabhängigen Eigensteuerung des Prozesses durch den Kunden selbst. Weiterhin besteht aber insbesondere auch die Möglichkeit, daß von der EVU-Leitstelle 42 über die Steuereinheit 41 Einfluß auf die Steuerung der Produktion 43 genommen wird, und zwar durch Übermittlung von EVU-Steuer-Daten von der EVU-Leitstelle 42 an den Kunden bzw. an die dortige Steuereinheit 41, die dann aufgrund dieser Steuer-Daten unter Berücksichtigung von in der Steuereinheit 41 oder in einem peripheren Gerät abgelegten Parameter einen energie- und tarifgesteuerten Eingriff in der Produktion 43 oder in einen Bereich dieser Produktion veranlaßt. Diese Steuer-Daten beinhalten beispielsweise ein Angebot eines EVU in Form von Tarif-Parametern, die unter Berücksichtigung des vorhandenen Energie-Angebots und/oder des allgemeinen Energie-Verbrauchs für eine bestimmte Zeit (beispielsweise abweichend von einem vereinbarten Grundtarif) gelten. Weiterhin können diese EVU-Steuer-Daten selbstverständlich auch Angebote unterschiedlicher EVU sein, wobei dann gesteuert über die Steuereinheit 41 und das System zur Erfassung und Berechnung der abrechnungsrelevanten Verbrauchsgrößen die für die Aufrechterhaltung der Produktion 43 benötigte Energie jeweils von dem günstigsten Anbieter bzw. EVU bezogen wird.

In der vorbeschriebenen Weise wird von der EVU-Leitstelle 42 über die Steuereinheit 41 mittelbar steuernd in die Produktion 43 eingegriffen. Grundsätzlich besteht auch die Möglichkeit einer direkten Steuerung, wobei dann in der EVU-Leitstelle 42 auch der jeweilige Verbrauch, wie er z.B. an den Meßstationen 4a gemessen wird, für eine optimale energie- und tarifmäßige Steuerung unter Berücksichtigung der für den jeweiligen Kunden geltenden tarifrelevanten Parameter (Kundentarif) berücksichtigt werden. Die Verbrauchswerte der Meßstationen 4a werden hierbei in gleicher Weise über das Netz 1 an den EVU-Rechner 7 bzw. an die EVU-Leitstelle 42 übertragen, wie dies vorstehend für die Verbrauchswerte der Meßeinrichtungen 4 beschrieben wurde. Auch sind die Meßeinrichtungen 4a beispielsweise in der gleichen Weise wie die Meßeirichtungen 4 ausgebildet.

Die direkte energie- und tarifmäßige Steuerung der Produktion 43 oder von Bereichen dieser Produktion durch die EVU-Leitstelle 42 erfolgt dann bevorzugt jeweils in Abstimmung mit den jeweiligen Kunden bzw. mit der Kundenleitstelle 45.

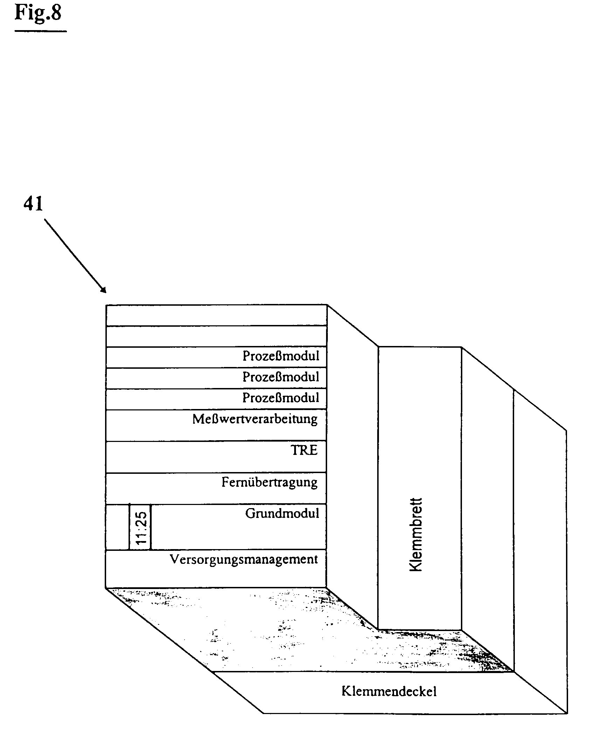

Hardware- und softwaremäßig ist die Einheit 41 modulartig aufgebaut, wie dies in der Figur 8 angedeutet ist. Hierdurch ist eine individuelle Anpassung an unterschiedlichste Aufgaben möglich. Insbesondere ist auch hinsichtlich der Schnittstellen 46' - 50' ein modularer Aufbau gewählt, so daß unterschiedlichste Bussysteme, beispielsweise LONWORKS (Gebäudesystemtechnik/Automatisierungstechnik), Instabus (Gebäudesystemtechnik), Profibus (Automatisierungstechnik), Interbus S (Automatisierungstechnik), CAN (Automatisierungstechnik) usw. verwendet werden können. Ein Vorteil besteht u.a. darin, daß bei neuen Systemen ein beliebiges Bussystem gewählt werden kann, insbesondere auch ein solches, welches für eine bestimmte Anwendung besonders vorteilhaft ist (Flexibilität bei neuen Systemen). Weiterhin gestattet der vorbeschriebene modulartige Aufbau auch, daß die Einheit 41 problemlos in bereits bestehende Systeme integriert werden kann. Eine weitere Besonderheit besteht darin, daß die Kommunikations- und Steuereinheit 41 als vollwertiger Rechner mit eigenem Betriebssystem ausgestattet ist, so daß insbesondere auch eine einfache softwaremäßige Anpassung der Schnittstellen an verschiedene Bussysteme möglich ist, und zwar unter Verwendung von entsprechenden Treibern.

Es ist selbstverständlich auch möglich, das Kundenprozeßsteuersystem nicht über das Netzwerk 1 zu betreiben, sondern beispielsweise über ein anderes Medium oder einer anderen Datenverbindung zwischen der Leitstelle 42 und der Kommunikations- und Steuereinheit 41 des jeweiligen Kunden.

Die Erfindung wurde voranstehend an einem Ausführungsbeispiel beschrieben. Es versteht sich, daß zahlreiche Änderungen sowie Ergänzungen möglich sind, ohne daß dadurch der der Erfindung zugrundeliegende Erfindungsgedanke verlassen wird.

### Bezugszeichenliste

| 1 | Netzwerk |
|---|---|
| 2 | Satellit |
| 3 | Empfänger |
| 4, 4a | Meßstation |
| 5 | TV-Gerät |
| 6 | PC-Terminal |
| 7 | Server |
| 8 | EVU-Terminal |
| 9 | Datensatz |
| 10 | Identifikation |
| 11 | Meßwerk |
| 12 | Impulsfolge |
| 13 | Zählregister |
| 14 | Meßwertspeicher |
| 15 | Kurve |
| 16 | interne Steuereinheit |
| 17 | Speicher |
| 18 | Datenschnittstelle |
| 19 | Steuerausgang |
| 20 | Impulsausgang |
| 21 | Echtzeit-Uhr |
| 22 | Zwischenspeicherung |
| 23 | Datenverarbeitung |
| 24 | Datenspeicher |
| 25 | gespeicherte Tarifparameter |
| 26 | Eingabe |
| 27 | Graphikprogramm |
| 30, 31 | Meßmodul |
| 32 | Hallsensor |
| 33 | Stromspule |
| 34 | Vorwiderstand |
| 35 | Wandler |

| 36, 37 | Eingangsstufe |
| 38, 39 | Tiefpaß |
| 40' | Mikroprozessor |
| 40 | System |
| 41 | Steuereinheit |
| 42 | EVU-Leitstelle |
| 43 | Produktion |
| 44 | Zähler |
| 45 | Kundenleitstelle |
| 46 - 50 | Bus |
| 46' - 50' | Schnittstelle |
| 51 | Anschluß/Terminal |

**Patentansprüche**

1. System zur energie- und/oder tarif-abhängigen Steuerung von Leistungsverbrauchern, insbesondere elektischen Leistungsverbrauchern, beispielsweise einer Produktion und/oder eines Teils einer Produktion, **gekennzeichnet** durch eine Kommunikations- und Steuereinheit (41), die für eine Übertragung von Meß- und/oder Steuerdaten mit dem Leistungsverbraucher (43) sowie mit wenigstens einer Leitstelle (42) zumindest eines Leistungsanbieters in Verbindung steht, und zwar zur energie- und/oder tarif-abhängigen Steuerung des wenigstens einen Verbrauchers (43) durch oder in Abhägigkeit von Steuer-Daten, insbesondere Tarif-Daten, beispielsweise in Form eines tarifrelevante Parameter enthaltenden Datensatzes, die von der Leitstelle (42) an die Steuereinheit (41) übermittelt werden.

2. System zur energie- und/oder tarif-abhängigen Steuerung von Leistungsverbrauchern, insbesondere elektischen Leistungsverbrauchern, beispielsweise einer Produktion und/oder eines Teils einer Produktion, **gekennzeichnet** durch eine Kommunikations- und Steuereinheit (41), die für eine Übertragung von Meß- und/oder Steuerdaten zumindest mit dem Leistungsverbraucher (43) sowie mit wenigstens einer Leitstelle (42) zumindest eines Leistungsanbieters in Verbindung steht und sowohl hardwaremäßig als auch softwaremäßig einen modularen Aufbau aufweist.

3. System zur energie- und/oder tarif-abhängigen Steuerung von Leistungsverbrauchern, insbesondere elektischen Leistungsverbrauchern, beispielsweise einer Produktion und/oder eines Teils einer Produktion, **gekennzeichnet** durch eine Kommunikations- und Steuereinheit (41), die für eine Übertragung von Meß- und/oder Steuerdaten mit dem Leistungsverbraucher (43) sowie mit wenigstens einer Leitstelle (42) zumindest eines Leistungsanbieters in Verbindung steht, wobei die Kommunikations- und Steuereinheit u.a. Prozessormittel und zugehörige Speichermittel sowie ein eigenes Betriebssystem (Echtzeitbetriebssystem) zum Steuern von Schnittstellen und zum Laden von Programmen, z.B. Steuerprogramm aufweist.

4. System zur energie- und/oder tarif-abhängigen Steuerung von Leistungsverbrauchern, insbesondere elektischen Leistungsverbrauchern, beispielsweise einer Produktion und/oder eines Teils einer Produktion, mit einer Kommunikations- und Steuereinheit (41), die für eine Übertragung von dem Verbrauch entsprechenden Meßdaten mit einer Meßstation (44) des jeweiligen Leistungsverbraucher (43) sowie mit wenigstens einer Leitstelle (42) zumindest eines Leistungsanbieters in Verbindung steht, und zwar zur energie- und/oder tarifabhängigen Steuerung des wenigstens einen Verbrauchers (43) durch oder in Abhägigkeit von Daten, die von der Leitstelle (42) an die Steuereinheit (41) geliefert werden, **dadurch gekennzeichnet,** daß das System zur Übertragung eines tarifrelevante Parameter enthaltenden Datensatzes von der Leitstelle (42) an die Kommunikations- und Steuereinheit (41) und zur Speicherung dieses Datensatzes in der Kommunikations- und Steuereinheit (41) ausgebildet ist, die unter Berücksichtigung dieser Parameter den wenigstens einen Verbraucher (43) steuert.

5. System nach Anspruch 1,3 oder 4, dadurch gekennzeichnet, daß die Kommunikations- und Steuereinheit (41), sowohl hardwaremäßig als auch softwaremäßig einen modularen Aufbau aufweist.

6. System nach Anspruch 1, 2 oder 4, dadurch gekennzeichnet, daß die Kommunikations- und Steuereinheit (41) u.a. Prozessormittel und zugehörige Speichermittel sowie ein eigenes Betriebssystem(Echtzeitbetriebssystem) zum Steuern von Schnittstellen und zum Laden von Programmen, z.B. Steuerprogrammen aufweist.

7. System nach einem der vorhergehenden Ansprüche, dadurch gekennzeichnet,

daß über die Steuereinheit (41) eine unmittelbare Steuerung des Verbrauchers (43) durch die Leitstelle in Abhängigkeit eines gemessenen, aktuellen Verbrauchs und unter Berücksichtigung der tarifrelevanten Parameter erfolgt,
und/oder

daß durch die Kommunikations- und Steuereinheit (41) die Steuerung des wenigstens einen Leistungsverbrauchers (43) unter Berücksichtigung des gemessenen tatsächlichen Verbrauchs und/oder unter Berücksichtigung der übertragenen Steuer-Daten sowie unter Berücksichtigung von in der Steuereinheit (41) abgelegten Tarif-Parameter und/oder Programmen erfolgt,
und/oder

daß die Steuerung jeweils unter Berücksichtigung des am Leistungsverbraucher oder der Produktion (43) gemessenen tatsächlichen Verbrauchs erfolgt.

8. System nach einem der vorhergehenden Ansprüche, dadurch gekennzeichnet,

daß über die Kommunikations- und Steuereinheit (41) eine Überwachung und/oder Steuerung des wenigstens einen Verbrauchers (43) an einer dem Leistungsabnehmer bzw. Kunden zugeordneten Kundenleitstelle (45) erfolgt,
und/oder
daß eine Überwachung und/oder Ermittlung des Leistungsverbrauchs des wenigstens einen Leistungsverbrauchers (43) über die Kommunikations- und Steuereinheit (41) an der Leitstelle (42) oder an einem Rechner oder Server (7) des Leistungsanbieters erfolgt.

9. System nach einem der vorhergehenden Ansprüche, dadurch gekennzeichnet, daß die Überwachung und/oder Registrierung des Verbrauchs des wenigstens einen Verbrauchers (43) über die Kommunikations- und Steuereinheit (41) in der an diese angeschlossenen Kundenleitstelle (45) erfolgt.

10. System nach einem der vorhergehenden Ansprüche, dadurch gekennzeichnet, daß die Kommunikations- und Steuereinheit (41) Schnittstellen (46' - 50') aufweist, die hardware- und softwaremäßig an unterschiedliche Bus-Systeme anpaßbar sind.

11. System nach einem der vorhergehenden Ansprüche, dadurch gekennzeichnet, daß es Bestandteil eines Systems zur Erfassung und/oder Berechnung von abrechnungsrelevanten Verbrauchsgrößen der von Leistungsabnehmern an Leistungsverbrauchern bezogenen Leistung ist, und zwar durch Messung und Registrierung des Verbrauchs unter Berücksichtigung von für einen Leistungsabnehmer gültigen Tarif-Parametern, daß von einer Vielzahl von Meßstationen (4) jeweils wenigstens eine einem jeden Leistungsverbraucher zugeordnet ist, daß die Meßstationen (4) jeweils über wenigstens ein Datennetz (1) mit wenigstens einem an das Datennetz angeschlossenen Rechner oder Server (7) oder der Leitstelle des Leistungsanbieters (42) korrespondieren, daß die Meßstationen (4) lediglich den Verbrauch ermitteln und als Verbrauchswerte oder als ein dem jeweiligen Verbrauch proportionaler Datensatz (9) an den zugehörigen Rechner oder Server (7) oder die Leitstelle (42) übertragen, daß sämtliche tarifrelevanten Parameter in dem zugehörigen Rechner oder Server (7) abgelegt und dort die verrechnungsrelevanten Daten unter Berücksichtigung der übermittelten Verbrauchswerte und der Tarifparameter gebildet werden.

12. System nach einem der vorhergehenden Ansprüche, dadurch gekennzeichnet, daß auf dem jeweiligen Rechner oder Server (7) für jeden Verbraucher wenigstens ein virtuelles Tarif-Modul gebildet ist, welches die abrechnungsrelevanten Verbrauchsgrößen enthält.

13. System nach einem der vorhergehenden Ansprüche, dadurch gekennzeichnet, daß auf dem jeweiligen Rechner oder Server (7) für jeden Verbraucher wenigstens ein virtuelles Tarif-Modul gebildet ist, welches enthält

- Daten über den während der laufenden Abrechnungsperiode angefallenen Verbrauch, vorzugsweise getrennt für unterschiedliche Tarif-Zonen und/oder Tarif-Zeiten,
- den in Vergleichszeiten, d.h. z.B innerhalb der letzten Monate angefallenen Verbrauch, vorzugsweise wiederum getrennt nach Tarif-Zonen und/oder Tarif-Zeiten, - die innerhalb der laufenden Abrechnungsperiode angefallene maximale Vebrauch, der entsprechende Wert in einem vorausgegangenen Monat,
- den Verbrauch gestaffelt nach tarifabhängigen Verbrauchsgrenzen usw.

14. System nach einem der vorhergehenden Ansprüche, dadurch gekennzeichnet, daß die Verbrauchsdaten von den Meßstationen (4) zyklisch an den jeweiligen Rechner oder Server (7) übermittelt werden.

**15.** System nach einem der vorhergehenden Ansprüche, dadurch gekennzeichnet,

daß die Verbrauchsdaten von den Meßstationen (4) auf Abruf, beispielsweise durch den zugeordneten Rechner oder Server oder einen ebenfalls an das Netzwerk (1) angeschlossenes Terminal, an den zugehörigen Rechner oder Server (7) übertragen werden,
und/oder
daß die Verbrauchsdaten als ein Verbrauchsprofil, welches den zeitlichen Verlauf des Verbrauches enthält, für eine Abrechnungs- oder Abfrageperiode von den Meßstationen (4) an den zugehörigen Rechner oder Server (7) übertragen werden,
und/oder
daß die Verbrauchsdaten als absoluter Verbrauch innerhalb der Abfrage- oder Abrechnungsperiode übertragen werden,
und/oder
daß die Verbrauchsdaten als absoluter Verbrauch innerhalb der Abfrage- oder Abrechnungsperiode sowie zusätzlich auch als Verbrauchsprofil übertragen werden.

**16.** System nach einem der vorhergehenden Ansprüche, dadurch gekennzeichnet, daß jede Meßstation einen Meßwertspeicher (14) aufweist, zur Speicherung der Verbrauchsdaten zumindest während einer Abfrage- oder Abrechnungsperiode.

**17.** System nach einem der vorhergehenden Ansprüche, dadurch gekennzeichnet, daß die Leistungskunden von einem Kunden-Terminal (5, 6) über das Datennetz (1) Zugang zu ihrem jeweiligen auf dem Rechner oder Server (7) gebildeten virtuellen Zähler bzw. Tarif-Modul haben, um die dortigen verrechnungsrelevanten Daten oder Werte für Kontrollzwecke abzurufen.

**18.** System nach einem der vorhergehenden Ansprüche, gekennzeichnet durch seine Ausbildung als interaktives System, welches verrechnungsrelevante Parameter, insbesondere auch Tarif-Parameter an die Meßstationen (4) übertragen kann, wie z.B. Beginn und/oder Ende einer bestimmten Tarif-Zeit, Beginn und/oder Ende einer Meß- oder Prüfperiode, innerhalb der der in dieser Periode aufgelaufene Gesamtverbrauch gemessen wird, Beginn und/oder Ende der Abfrage- bzw. Abrechnungsperiode.

**19.** System nach einem der vorhergehenden Ansprüche, dadurch gekennzeichnet, daß wenigstens eine Meßstation (4) Steuerausgänge (19, 20) aufweist, an denen ein dem Verbrauch proportionales Signal (12) sowie verrechnungsrelevante, vom jeweiligen Rechner oder Server (7) übermittelte Signale zur Verfügung stehen, und zwar für die Ansteuerung einer beim Leistungsempfänger installierten Überwachungseinheit, z.B. für ein Energie- Management-System.

**20.** System nach einem der vorhergehenden Ansprüche, dadurch gekennzeichnet, daß jede Meßstation wenigstens ein Meßwerk (11) zur Erfassung des Verbrauchs sowie wenigstens einen Meßwertspeicher zur Speicherung des gemessenen Verbrauchs zumindest während der jeweiligen Abfrage- bzw. Abrechnungsperiode aufweist, wobei das Meßwerk vorzugsweise von zwei Meßmodulen (30, 31) gebildet ist, die den gleichen Verbrauch messen, und zwar vorzugsweise nach unterschiedlichen Meßmethoden.

EP 0 895 333 A2

SATELLIT —2

ZÄHLEIN-RICHTUNG —4

—3

SATELLITENANTENNE

1

SERVER —7

TELEVISION —5

—6

PC TERMINAL

VERSCHIEDENE ÜBERTRAGUNGSMEDIEN

ÖFFENTLICHE / PRIVATE NETZE

SERVER —7

EVU - TERMINAL —8

FIG. 1

EP 0 895 333 A2

Spannung

Strom

Meßwerk —11

—12

Zählregister —13

Meßwertspeicher

Lastprofil —14

FIG. 2

Impulsausgang —20

—12

Tarif
Meßperiode
Abrechnungsperiode

Steuerausgänge —19

interne Steuereinheit —16
- Tarif
- Meßperiode
- Abrechnungsperiode

lokale Datenschnittstellen
Datenendeinrichtung —18

Datenfernübertragung

9 — 10 —

—21

16

FIG. 4

FIG. 3

FIG. 5

FIG. 6

Fig.7

# Fig.8

41

| | Prozeßmodul |
|---|---|
| | Prozeßmodul |
| | Prozeßmodul |
| | Meßwertverarbeitung |
| | TRE |
| | Fernübertragung |
| 11:25 | Grundmodul |
| | Versorgungsmanagement |

Klemmbrett

Klemmendeckel

EP 0 895 333 A2

Fig.9

46

Gebäudesystemtechnik

Leitsystem

Sensoren

LON/INSTABUS

Profibus,LON,CAN...

Sensoren

Leitsystem
(SPS)

Automatisierungstechnik

46      46′

Kundenprozeß

EVU-Interface

Messwertverarbeitung

41

Grundmodule

Serviceinterface

Microcontrollersystem

interner Speicher

Alarm-/-
Ereignissteuerung

Versorgungsmanagement

11:25

Meßprozeß

Energiemeßgeräte

47′ (48′)

44(4a)